# EUROPÄISCHE PATENTSCHRIFT

(11) **EP 1 746 872 B1**
(45) Veröffentlichungstag und Bekanntmachung des Hinweises auf die Patenterteilung: **02.05.2012**
(21) Anmeldenummer: 06116508.0
(22) Anmeldetag: 03.07.2006
(51) Int. Cl.: H05K 5/02, G06F 1/00

(54) **Leiterplattenanordnung und Verfahren zu deren Herstellung**
Circuit board assembly and method for producing the same
Assemblage avec un circuit ainsi que sa méthode de fabrication

(30) Priorität: 11.07.2005 DE 102005033117
(43) Veröffentlichungstag der Anmeldung: 24.01.2007
(73) Patentinhaber: Continental Automotive GmbH, 30165 Hannover (DE)
(72) Erfinder: Holst, Jens-Christian, 10405, Berlin (DE); Jensen, Jens Dahl, 14050, Berlin (DE); Köhn, Manfred, 13593, Berlin (DE); Lange, Roland, 78086, Brigachtal (DE); Pyritz, Uwe, 13599, Berlin (DE)

(56) Entgegenhaltungen:
- EP-A- 1 432 031
- DE-B3- 10 337 567
- GB-A- 2 195 478

## Beschreibung

Die Erfindung bezieht sich auf eine Leiterplattenanordnung mit den Merkmalen gemäß dem Oberbegriff des Anspruchs 1.

Es ist bekannt, eine Leiterplatte vor einem unberechtigten externen Zugriff und damit vor unberechtigten Manipulationen zu schützen, indem die Leiterplatte mit einer so genannten "Bohrschutzfolie" umhüllt wird. Bahrschutzfolien werden durch flexible Leiterplatten gebildet, die eine Detektorschicht in Form einer Leiterbahnlage aufweisen. Die Leiterbahnlage ist derart strukturiert, dass ein sehr dichtes Netz von Leiterbahnen gebildet wird. Die Leiterbahnen lassen sich an eine Manipulationsdetektoreinrichtung anschließen, mit der sich der mechanische Zustand der Leiterbahnen überwachen lässt. Wird nun von außen in unberechtigter Weise probiert, auf eine von dem Netz der Leiterbahnen umhüllte elektrische Nutzschaltung zuzugreifen, so werden mit sehr großer Wahrscheinlichkeit einzelne oder mehrere Leiterbahnen der Detektorschicht zerstört oder miteinander kurzgeschlossen. Das Unterbrechen und/oder das Kurzschließen der Leiterbahnen kann festgestellt werden und es kann eine "Abwehrmaßnahme" eingeleitet werden.

Aus Druckschrift EP 1 432 031 A1 ist eine Leiterplattenanordnung bekannt, wobei mindestens eine gedruckte Leiterplatte vorgesehen ist, die einen Abstandshalter zwischen einer unteren Leiterplatte und einer oberen Leiterplatte bildet. Die Leiterplatten weisen jeweils eine Schicht eines gedruckten Leiterbildes zur Manipulationsanzeige auf, wobei die Schicht eines Leiterbildes, das Bestandteil einer Antimanipulationskapselung ist, des Abstandshalters sowohl innerhalb der Leiterplattenanordnung als auch in einer Ebene parallel zu oberer und unterer Leiterplatte angeordnet ist.

Weiterhin sind aus Druckschrift DE 103 37 567 B3 zwei parallele Leiterplatten mit einem senkrecht zwischen den Leiterplatten angeordneten, von Kunststoffteilen umschlossenen Elastomer mit senkrecht zu den Leiterplatten angeordneten leitenden Bereichen bekannt.

Der Erfindung liegt die Aufgabe zugrunde, eine Leiterplattenanordnung anzugeben, die sich sehr einfach und kostengünstig herstellen lässt und die einen sehr kompakten Aufbau der Leiterplattenanordnung ermöglicht.

Diese Aufgabe wird ausgehend von einer Leiterplattenanordnung der eingangs angegebenen Art erfindungsgemäß durch die kennzeichnenden Merkmale des Anspruchs 1 gelöst. Vorteilhafte Ausgestaltungen der erfindungsgemäßen Leiterplattenanordnung sind in Unteransprüchen angegeben.

Danach ist erfindungsgemäß vorgesehen, dass die Leiterplattenanordnung einen Abstandshalter mit einer Durchgangsöffnung umfasst. Der Abstandshalter ist mit einer Befestigungsfläche auf der Leiterplatte derart angeordnet, dass eine auf bzw. in der Leiterplatte angeordnete Nutzschaltung im Bereich der Durchgangsöffnung liegt. Auf einer der einen Befestigungsfläche gegenüber liegenden weiteren Befestigungsfläche des Abstandshalters ist eine weitere Leiterplatte angeordnet. Eine Leiterbahnschicht in der einen Leiterplatte, eine weitere Leiterbahnschicht in der weiteren Leiterplatte sowie eine Leiterbahnschicht außen am Abstandshalter bilden die Detektorschicht bzw. Bestandteile der Detektorschicht.

Ein wesentlicher Vorteil der erfindungsgemäßen Leiterplattenanordnung ist darin zu sehen, dass sich diese sehr einfach herstellen lässt. Die zum Schutz der Leiterplattenanordnung vorgesehene Detektorschicht wird u. a. durch Leiterbahnschichten der beiden Leiterplatten gebildet. Bohrschutzfolien, wie sie bei vorbekannten Leiterplattenanordnungen eingesetzt werden, sind bei der erfindungsgemäßen Leiterplattenanordnung nicht erforderlich. Trotz des sehr einfachen Aufbaus der erfindungsgemäßen Leiterplattenanordnung bietet diese dennoch einen sehr großen Grad an Manipulationssicherheit, da nämlich auch der Bereich zwischen den beiden Leiterplatten erfindungsgemäß vor einem unberechtigten Zugriff geschützt wird. Hierzu dient der erfindungsgemäß vorgesehene Abstandshalter, der die Nutzschaltung vor einem seitlichen Zugriff schützt. Der Abstandshalter ist hierfür an seiner Außenseite ebenfalls mit einer Leiterbahnschicht versehen, die gemeinsam mit den beiden Leiterbahnschichten in den beiden Leiterplatten eine die Nutzschaltung vollständig umfassende bzw. umschließende Detektorschicht zum Feststellen von Manipulationsversuchen bildet.

Ein weiterer wesentlicher Vorteil der erfindungsgemäßen Leiterplattenanordnung ist darin zu sehen, dass sie einen sehr kompakten Aufbau ermöglicht. Der kompakte Aufbau ist konkret darauf zurückzuführen, dass wesentliche Bereiche der Detektorschicht durch Leiterbahnschichten in den beiden Leiterplatten gebildet werden. Die Leiterplatten schützen sich bei der erfindungsgemäßen Leiterplattenanordnung somit quasi selbst. Der erfindungsgemäß vorgesehene Abstandshalter, der einen etwaigen seitlichen Zugriff von außen detektieren kann, führt zu keiner wesentlichen Vergrößerung der Bauhöhe der Leiterplattenanordnung; denn die Höhe des Abstandshalters senkrecht zu den beiden Leiterplatten muss nur so groß gewählt werden, dass die Nutzschaltung untergebracht werden kann: Konkret müssen lediglich die auf der Oberseite der Leiterplatten - damit ist jeweils die dem Abstandshalter zugewandte Seite der beiden Leiterplatten gemeint - zur Bildung der elektrischen Nutzschaltung aufgebrachten elektrischen Komponenten, beispielsweise mikroelektronische Chips, Widerstände, Transistoren, Kondensatoren etc., in den durch den Abstandshalter zwischen den beiden Leiterplatten bereitgestellten Hohl- bzw. Innenraum hineinpassen.

Im Hinblick auf ein möglichst geringes Gewicht der Leiterplattenanordnung und im Hinblick auf eine möglichst große nutzbare Fläche im Innen- bzw. Hohlraum wird es als vorteilhaft angesehen, wenn die Fläche der Durchgangsöffnung des Abstandshalters im Querschnitt betrachtet größer als die beiden Befestigungsflächen ist. Konkret werden die Befestigungsflächen bevorzugt so klein wie möglich gewählt; bei der Dimensionierung des Abstandshalters ist diesbezüglich lediglich zu berücksichtigen, dass die gesamte Leiterplattenanordnung eine ausreichende mechanische Stabilität behält.

Der Abstandshalter ist ringförmig, insbesondere beispielsweise rahmenförmig, ausgestaltet, wobei der Innenringbereich die Durchgangsöfftnung bildet. Der Innenrirgbereich kann beispielsweise rund oder anders geformt sein. Beispielsweise kann der Innenringbereich oval oder auch mehreckig, insbesondere quadratisch oder rechteckförmig, geformt sein.

In Hinblick auf einen möglichst kompakten Aufbau der Leiterplattenanordnung sind die beiden Befestigungsflächen des Abstandshalters vorzugsweise parallel zueinander angeordnet; demgemäß ist dann auch die Anordnung der beiden Leiterplatten zueinander parallel.

Um sicherzustellen, dass äußere Zugriffsversuche mit sehr hoher Wahrscheinlichkeit detektiert werden, weist die Detektorschicht vorzugsweise eine Vielzahl an elektrischen Leiterbahnen auf, die eng benachbart, insbesondere mäanderförmig zueinander verlaufen. Die elektrischen Leiterbahnen der Leiterbahnschicht des Abstandshalters laufen vorzugsweise ringförmig um die Durchgangsöffnung des Abstandshalters ganz oder teilweise herum; bevorzugt umläuft jede Leiterbahn jeweils zumindest die Hälfte der Durchgangsöffnung.

Auch die weitere Leiterplatte kann im Übrigen eine Nutzschaltung umfassen. Denkbar ist, dass die beiden Nutzschaltungen der beiden Leiterplatten zusammenarbeiten und gemeinsam eine "Gesamtnutzschaltung" bilden. Alternativ können die beiden Nutzschaltungen der beiden Leiterplatten auch unterschiedliche Aufgaben übernehmen und separate Nutzschaltungen bilden.

Werden die beiden Nutzschaltunger der beiden Leiterplatten elektrisch miteinander verbunden, so kann dies beispielsweise über Durchkontaktierungen erfolgen, die im Innenbereich der Durchgangsöffnung, und zwar an der Innenseite des Abstandshalters, angeordnet werden. Handelt es sich bei dem Abstandshalter um einen ringförmigen Abstandshalter, so sind die Durchkontaktierungen also vorzugsweise am Innenringbereich des Abstandshalters angebracht.

Darüber hinaus wird es als vorteilhaft angesehen, wenn der Abstandshalter durch einen Schutzring umgeben wird, der ebenfalls zwischen den beiden Leiterplatten befestigt ist und den Abstandshalter vollständig umschließt. Die Funktion eines solchen Abstandshalters besteht beispielsweise darin, die außen am Abstandshalter angebrachte Leiterbahnschicht optisch abzudecken, so dass die Leiterbahnschicht außen am Abstandshalter nicht erkennbar ist. Wird nämlich die Leiterbahnschicht außen am Abstandshalter verdeckt, so lässt sich nicht ohne weiteres feststellen, an welchen Stellen ein Bohrer oder ein sonstiges Manipulationswerkzeug angesetzt werden müsste, um ohne ein Zerstören oder Verletzen der Detektorschicht auf die Nutzschaltung der Leiterplattenanordnung unberechtigt zugreifen zu können.

Der Schutzring kann neben seiner Abdeckfunktion auch eine elektrische Funktion aufweisen. Vorzugsweise ist der Schutzring aus einem leitenden Material gebildet oder mit einem leitenden Material außen beschichtet, so dass der Schutzring einen elektrischen Abschirmring bildet, durch den eine elektromagnetische Abschirmung der Nutzschaltung erfolgt. EMV-Probleme lassen sich dadurch reduzierten.

Die Leiterbahnschicht außen am Abstandshalter ist unter einem Winkel, der vom rechten Winkel abweicht, zu den beiden Leiterbahnachichten der beiden Leiterplatten angeordnet; in dieser Weise wirkt der Abstand, den die Leiterbahnen technologisch bzw. herstellungsbedingt zueinander aufweisen müssen, von außen bzw. von der Seite her gesehen kleiner und die Angriffsfläche für Manipulationsversuche von außen wird reduziert.

Bevorzugt weist die Manipulationsdetektoreinrichtung eine Detektorschaltung auf, die mit der Vielzahl an elektrischen Leiterbahnen der Detektorschicht verbunden ist und die feststellt, wenn Kurzschlüsse und/oder elektrische Unterbrechungen in einer oder in mehreren der Leiterbahnen auftreten. Die Manipulationsdetektoreinrichtung steht vorzugsweise mit der Nutzschaltung in Verbindung und setzt diese irreversibel außer Betrieb, wenn die Detektorschaltung einen Kurzschluss und/oder eine elektrische Unterbrechung in einer oder in mehreren Leiterbahnen feststellt. Beispielsweise setzt die Manipulationsdetektoreinrichtung die Nutzschaltung außer Betrieb, indem sie eine Speichereinrichtung der Nutzschaltung löscht und/oder überschreibt. Ein solches Löschen und/oder Überschreiben der Speichereinrichtung ist insbesondere dann empfehlenswert, wenn in der Speichereinrichtung relevante Daten, beispielsweise Zugangscodes, Passwörter, Pinzahlen, Kontonummern oder dergleichen gespeichert sind.

Die Erfindung bezieht sich darüber hinaus auf ein Verfahren zum Herstellen einer Leiterplattenordnung, bei dem eine Leiterplatte mit einer elektrischen Nutzschaltung versehen wird und eine Manipulationsdetektorschaltung mit einer Detektorschicht hergestellt wird, die die Nutzschaltung außen umschließt und detektieren kann, wenn auf die Nutzschaltung von außen zugegriffen wird.

Um ein solches Verfahren besonders einfach und kostengünstig durchführen zu können, ist erfindungsgemäß vorgesehen, dass ein Abstandshalter mit einer Durchgangsöffnung hergestellt wird, wobei der Abstandshalter mit einer Befestigungsfläche auf der Leiterplatte derart angebracht wird, dass im Innenbereich der Durchgangsöffnung die Nutzschaltung liegt. Auf einer der einen Befestigungsfläche gegenüberliegenden weiteren Befestigungsfläche des Abstandshalters wird eine weitere Leiterplatte angeordnet. Als Detektorschicht wird eine Leiterbahnschicht in der einen Leiterplatte, eine weitere Leiterbahnschicht in der weiteren Leiterplatte sowie eine Leiterbahnschicht außen am Abstandshalter verwendet.

Bezüglich der Vorteile des erfindungsgemäßen Verfahrens sei auf die obigen Ausführungen im Zusammenhang mit der erfindungsgemäßen Leiterplattenanordnung verwiesen, da die Vorteile der erfindungsgemäßen Leiterplattenanordnung den Vorteilen des erfindungsgemäßen Verfahrens weitgehend entsprechen.

Als vorteilhaft wird es angesehen, wenn für die Detektorschicht eine Vielzahl an elektrischen Leiterbahnen hergestellt wird, die eng benachbart, insbesondere mäanderförmig zueinander verlaufen, wobei der Verlauf und die Anordnung der elektrischen Leiterbahnen für jede Leiterbahnanordnung individuell gewählt wird. Im Idealfall weist jede hergestellte Leiterplattenanordnung einen einzigartigen Leiterbahnverlauf auf, so dass bei jeder Leiterplattenanordnung zunächst völlig unbekannt ist, wie die Detektorschicht ausgestaltet ist und wie eventuell Manipulationen durchgeführt werden könnten.

Ein individuelles Herstellen der elektrischen Leiterbahnen der Detektorschicht lässt sich beispielsweise dadurch ermöglichen, dass zunächst eine Leiterbahnschicht ganzflächig aufgebracht wird und die Leiterbahnschicht anschließend mit einem Laser individuell strukturiert wird. Besonders bevorzugt werden alle Leiterbahnschichten der Detektorschicht, also die Leiterbahnschicht außen am Abstandshalter sowie die beiden Leiterbahnschichten in den beiden Leiterplatten, in entsprechender Weise individuell hergestellt. Die Ansteuerung des Lasers kann beispielsweise mittels eines Steuerungsprogramms erfolgen, das Zufallszahlen oder Pseudozufallszahlen generiert und diese für die Steuerung des Lasers und damit für die Festelegung des Verlaufs der individuellen Leiterbahnen verwendet.

Die Erfindung wird nachfolgend anhand eines Ausführungsbeispiels erläutert. Dabei zeigen
- Figur 1: ein Ausführungsbeispiel einer erfindungsgemäßen Leiterplattenanordnung im Querschnitt,
- Figur 2: das Ausführungsbeispiel gemäß Figur 1 in der Draufsicht sowie
- Figur 3: den Verlauf von Leiterbahnen an der Außenseite eines Abstandshalters der Leiterplattenanordnung in einer vergrößerten Darstellung.

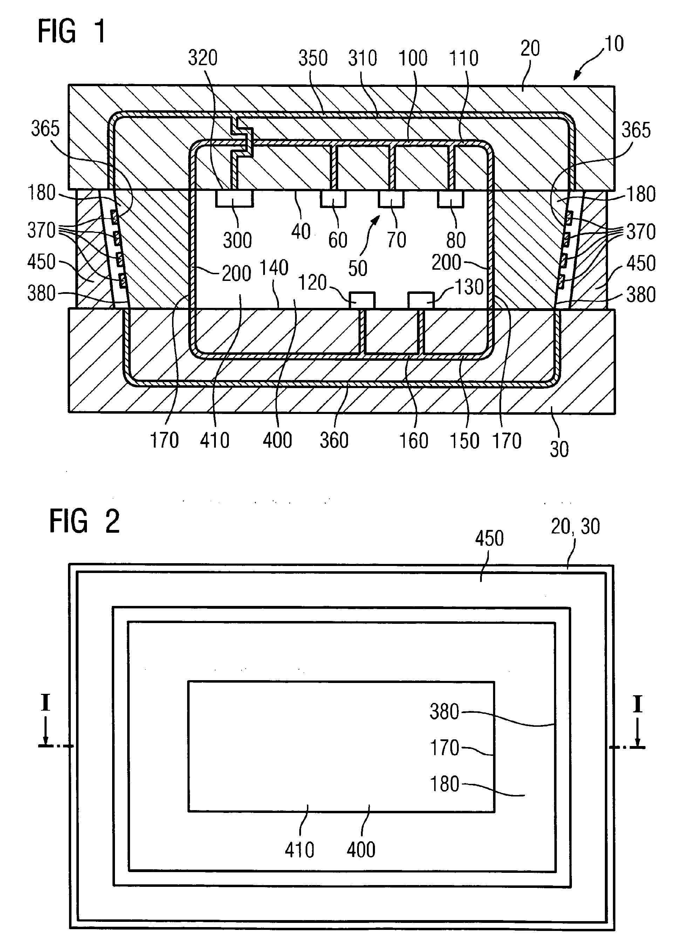

In den Figuren 1 bis 3 werden der Übersichtlichkeit halber für identische oder vergleichbare Komponenten dieselben Bezugszeichen verwendet.

In der Figur 1 erkennt man eine Leiterplattenanordnung 10 mit einer Leiterplatte 20 sowie mit einer weiteren Leiterplatte 30. Auf einer Oberseite 40 der einen Leiterplatte 20 ist eine Nutzschaltung 50 angeordnet, die Bauelemente 60, 70 und 80 umfasst, die an der Oberseite 40 der Leiterplatte 20 befestigt sind. Bei den Bauelementen 60, 70 und 80 handelt es sich vorzugsweise um Bauelemente mit einer sehr geringen Bauhöhe; geeignete Bauelemente sind beispielsweise SMD-Elemente.

Die Bauelemente 60, 70 und 80 der Nutzschaltung 50 sind untereinander mit Nutzleiterbahnen 100 verbunden, die in einer oder mehreren Nutzleiterbahnschichten 110 gebildet sind. In der Figur 1 ist aus Gründen der Übersichtlichkeit nur eine Nutzleiterbahnschicht eingezeichnet; die Nutzleiterbahnen 100 sind nur schematisch gezeigt.

Zu der Nutzschaltung 50 gehören darüber hinaus weitere elektrische Bauelemente 120 und 130, die auf einer Oberseite 140 der weiteren Leiterplatte 30 angeordnet sind. Die weiteren Bauelemente 120 und 130 sind über Nutzleiterbahnen 150 in einer Nutzleiterbahnschicht 160 miteinander verbunden. Darüber hinaus stehen die beiden Bauelemente 120 und 130 auch mit den Bauelementen 60, 70 und 80 auf der Oberseite 40 der einen Leiterplatte 20 in Verbindung. Hierfür sind an einer Innenseite 170 eines Abstandshalters 180 Durchkontaktierungen 200 angebracht, die die Nutzleiterbahnen 100 und 150 und damit die Nutzleiterbahnschichten 110 und 160 miteinander verbinden. Die Nutzschaltung 50 verteilt sich somit räumlich und elektrisch auf beide Leiterplatten 20 und 30. Der Abstandshalter 180 ist ringförmig und bildet einen Innenring der Leiterplattenanordnung 10; eine Durchgangsöffnung des Rings ist mit dem Bezugszeichen 400 gekennzeichnet. Durch die Durchgangsöffnung 400 wird zwischen den beiden Leiterplatten 20 und 30 ein Innenraum bzw. Hohlraum 410 gebildet.

Um einen unberechtigten Zugriff und eine Manipulation der Nutzschaltung 50 von außen zu vermeiden, ist die Leiterplattenanordnung 10 mit einer Manipulationsdetektoreinrichtung 300 geschützt. Die Manipulationsdetektoreinrichtung 300 weist eine Detektorschicht 310 auf, die die Nutzschaltung 50 von außen vollständig umschließt und mit der außerdem festgestellt bzw. detektiert werden kann, wenn auf die Nutzschaltung 50 von außen unberechtigt zugegriffen wird.

Die Manipulationsdetektoreinrichtung 300 weist außerdem eine Detektorschaltung 320 auf, die mit der Detektorschicht 310 elektrisch verbunden ist. Die Detektorschicht 310 umfasst eine Leiterbahnschicht 350 in der einen Leiterplatte 20, eine weitere Leiterbahnschicht 360 in der weiteren Leiterplatte 30 sowie eine Leiterbahnschicht 365 mit Leiterbahnen 370 außen an einer Außenseite 380 des Abstandshalters 180. Die drei Leiterbahnschichten 350, 360 und 365 sind elektrisch mit der Detektorschaltung 320 verbunden; eine Verbindung zwischen den Leiterbahnschichten 350 und 360 kann beispielsweise - obwohl in der Figur 1 nicht explizit eingezeichnet - auch über Durchkontaktierungen an der Innenseite 170 des Abstandshalters 180 hergestellt werden. Mit den Nutzleiterbahnen 100 und 150 stehen die Leiterbahnschichten 350, 360 und 365 nicht in elektrischem Kontakt.

Die drei Leiterbahnschichten 350, 360 und 365 weisen jeweils eine Vielzahl an elektrischen Leiterbahnen auf, die eng benachbart verlaufen und eine gitter- bzw. netzartige Struktur bilden, die die Nutzschaltung 50 als Schutznetz umgeben. Der Verlauf der Leiterbahnen der Leiterbahnschichten 350, 360 und 365 ist vorzugsweise mäanderförmig, um die Manipulationssicherheit der Detektorschicht 310 zu erhöhen.

Wie sich in der Figur 1 gut erkennen lässt, sind die beiden Leiterbahnschichten 350 und 360 bezüglich der Nutzleiterbahnschichten 110 und 160 außen angebracht und umschließen somit sowohl die Nutzschaltung 50 als auch deren Nutzleiterbahnschichten.

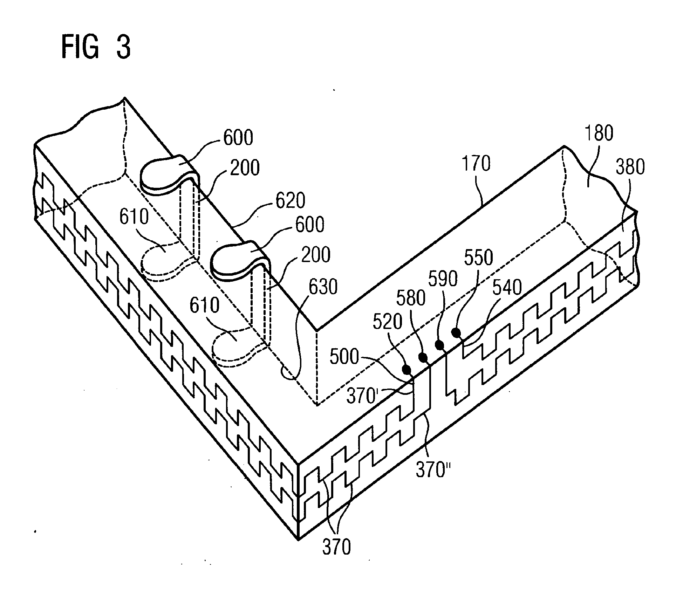

Die Leiterbahnen 370 der an der Außenseite 380 des Abstandshalters 180 angeordneten Leiterbahnschicht 365 verlaufen vorzugsweise um die Durchgangsöffnung 400, die durch den Abstandshalter 180 gebildet wird, herum; dabei umschließt jede der Leiterbahnen 370 der Leiterbahnschicht 365 vorzugsweise zumindest die Hälfte der Durchgangsöffnung 400. Der Verlauf der Leiterbahnen 370 an der Außenseite 380 des Abstandshalters 180 ist im Detail näher in der Figur 3 dargestellt und wird im Zusammenhang mit der Figur 3 näher erläutert.

Vorzugsweise ist die Außenseite 380 des Abstandshalters 180 nicht senkrecht, sondern in einem anderen Winkel zu den beiden Leiterplatten 20 und 30 ausgerichtet; dadurch wirken die Leiterbahnen 370 von der Seite aus betrachtet dichter benachbart, als sie tatsächlich sind. Die Erfolgschancen für eine Manipulation werden dadurch noch weiter reduziert.

In der Figur 1 ist darüber hinaus erkennbar, dass um den Abstandshalter 180 ein Schutzring 450 angeordnet ist, der den Abstandshalter 180 derart umgibt, dass der Abstandshalter 180 von dem Schutzring 450 sowie von den beiden Leiterplatten 20 und 30 vollständig eingeschlossen wird. Der Schutzring 450 dient dazu, die auf der Außenseite 380 angebrachten Leiterbahnen 370 der Leiterbahnschicht 365 optisch zu verdecken, so dass von außen nicht erkennbar ist, wo und wie die Leiterbahnen 370 in der Leiterbahnschicht 365 aussehen und verlaufen. Die Manipulationssicherheit der Leiterbahnanordnung 10 wird durch diesen Schutzring 450 deutlich vergrößert.

Wenn der Schutzring 450 eine elektromagnetische Abschirmung bieten soll, wird dieser vorzugsweise aus einem leitenden Material gebildet oder mit einem leitenden Material beschichtet. In diesem Falle wird der Schutzring vorzugsweise auf Massepotential gelegt.

Die Detektorschaltung 320 gemäß Figur 1 ist derart ausgestaltet, dass sie feststellt, wenn Kurzschlüsse und/oder elektrische Unterbrechungen in den Leiterbahnen der Leiterbahnschichten 350, 360 oder 365 auftreten. Werden Kurzschlüsse oder elektrische Unterbrechungen festgestellt, so schließt die Detektorschaltung 320 auf einen äußeren Manipulationsversuch und schaltet in einen Alarmzustand. In diesem Alarmzustand greift die Detektorschaltung 320 auf die Nutzschaltung 50 zu und setzt diese irreversibel außer Betrieb. Beispielsweise löscht die Detektorschaltung 320 eine Speichereinrichtung der Nutzschaltung 50; eine solche Speichereinrichtung kann beispielsweise durch das Bauelement 70 der Nutzschaltung 50 gebildet sein.

zusammengefasst bilden die beiden Leiterplatten 20 und 30 und der Abstandshalter 180 ein manipulationsgeschütztes Gehäuse mit dem manipulationsgeschützten Innenraum 410.

In der Figur 2 ist die Anordnung gemäß Figur 1 in der Draufsicht gezeigt. Man erkennt die beiden Leiterplatten 20 und 30, den ringförmigen Abstandshalter 180 sowie den Schutzring 450. Es ist deutlich zu erkennen, dass der Schutzring 450 den ringförmigen Abstandshalter 180 ringförmig umschließt. Der Abstandshalter 180 bildet somit einen rahmenförmigen Innenring und der Schutzring 450 einen rahmenförmigen Außenring, der den Innenring einschließt.

Aus Gründen der Übersichtlichkeit sind in der Figur 2 die auf der Innenseite 170 des ringförmigen Abstandshalters 180 angebrachten Durchkontaktierungen 200 (vgl. Figur 1), mit denen die beiden Leiterplatten 20 und 30 elektrisch miteinander verbunden sind, nicht eingezeichnet. Auch ist die an der Außenseite 380 des ringförmigen Abstandshalters 180 angeordnete Leiterbahnschicht 365 (vgl. Figur 1), mit der ein seitlicher Zugriff von außen auf den Innenraum 410 festgestellt wird, der Übersichtlichkeit wegen nicht explizit eingezeichnet.

In der Figur 3 erkennt man eine vergrößerte Darstellung eines Teiles des ringförmigen Abstandshalters 180. Man sieht, dass an der Außenseite 380 die Leiterbahnen 370 angeordnet sind, die mäanderförmig verlaufen. Jede der Leiterbahnen erstreckt sich einmal fast um den gesamten ringförmigen Abstandshalter 180 herum; dabei ist ein Ende 500 der Leiterbahn 370' mit einem ersten Anschlusspad 520 und das andere Ende 540 der Leiterbahn 370' mit einem weiteren Anschlusspad 550 verbunden. Die beiden Anschlusspads 520 und 550 stehen mit der Detektorschaltung 320 in Verbindung, so dass diese feststellen kann, wenn die Leiterbahn 370' elektrisch unterbrochen wird.

Die in der Figur 3 mit dem Bezugszeichen 370" gekennzeichnete Leiterbahn läuft zu der Leiterbahn 370' im Wesentlichen parallel und ist über Anschlusspads 580 und 590 mit der Detektorschaltung 320 verbunden. Die Detektorschaltung kann somit nicht nur feststellen, ob eine der beiden Leiterbahnen 370' oder 370" elektrisch unterbrochen ist; sie kann darüber hinaus feststellen, ob zwischen den beiden Leiterbahnen 370' und 370" ein elektrischer Kurzschluss aufgetreten ist. Die Detektorschaltung 320 kann die Leiterbahn 370' und 370" beispielsweise mit unterschiedlichen Potentialen beaufschlagen, um die entsprechenden Messsignale, die auf ein äußeres Einwirken und eine Zerstörung der Leiterbahnen schließen lassen, zu erzeugen.

In der Figur 3 erkennt man darüber hinaus die Durchkontaktierungen 200, die an der Innenseite 170 des Abstandshalters 180 angeordnet sind und an Anschlusspads 600 und 610 angeschlossen sind. Die Anschlusspads 600 liegen auf der einen Befestigungsfläche 620 des Abstandshalters 180 und die Anschlusspads 610 auf der der einen Befestigungsfläche 620 gegenüberliegenden Befestigungsfläche 630 des Abstandshalters 180 auf.

## Patentansprüche

1. Leiterplattenanordnung (10) mit
- einer Leiterplatte (20) mit einer elektrischen Nutzschaltung (50) und
- einer Manipulationsdetektoreinrichtung (300) mit einer Detektorschicht (310), die die Nutzschaltung außen umschließt und detektieren kann, wenn auf die Nutzschaltung von außen unberechtigt zugegriffen wird,
- wobei die Leiterplattenanordnung einen Abstandshalter (180) mit einer Durchgangsöffnung (400) umfasst, wobei der Abstandshalter (180) ringförmig ist, wobei der Innenringbereich die Durchgangsöffnung bildet, und wobei der Abstandshalter mit einer Befestigungsfläche (620) auf der Leiterplatte derart angebracht ist, dass die Nutzschaltung im Bereich der Durchgangsöffnung liegt, und
- wobei auf einer der einen Befestigungsfläche gegenüberliegenden weiteren Befestigungsfläche (630) des Abstandshalters eine weitere Leiterplatte (30) angeordnet ist,
- wobei die Detektorschicht eine Leiterbahnschicht (350) in der einen Leiterplatte und eine weitere Leiterbahnschicht (360) in der weiteren Leiterplatte umfasst,
**dadurch gekennzeichnet,**
- **dass** der Abstandshalter (180) an seiner Außenseite (380) mit einer Leiterbahnschicht (365) versehen ist,
- **dass** die Detektorschicht die Leiterbahnschicht (365) außen am Abstandshalter (180) umfasst und
- **dass** die Außenseite (380) des Abstandshalters (180) unter einem vom rechten Winkel abweichenden Winkel zu den beiden Leiterplatten (20, 30) angeordnet ist.

2. Leiterplattenanordnung nach Anspruch 1,
**dadurch gekennzeichnet,**
**dass** im Querschnitt betrachtet die Fläche der Durchgangsöffnung größer als die der beiden Befestigungsflächen ist.

3. Leiterplattenanordnung nach einem der voranstehenden Ansprüche,
**dadurch gekennzeichnet,**
**dass** die beiden Befestigungsflächen parallel zueinander angeordnet sind.

4. Leiterplattenanordnung nach einem der voranstehenden Ansprüche,
**dadurch gekennzeichnet,**
**dass** die Detektorschicht eine Vielzahl an elektrischen Leiterbahnen (370, 370', 370'') umfasst, die eng benachbart zueinander, insbesondere mäanderförmig, verlaufen.

5. Leiterplattenanordnung nach einem der voranstehenden Ansprüche,
**dadurch gekennzeichnet,**
**dass** die elektrischen Leiterbahnen (370, 370', 370'') der Leiterbahnschicht (365) des Abstandshalters um die Durchgangsöffnung herumlaufen, wobei jede Leiterbahn jeweils zumindest die Hälfte der Durchgangsöffnung umschließt.

6. Leiterplattananordnung nach einem der voranstehenden Ansprüche,
**dadurch gekennzeichnet,**
**dass** die weitere Leiterplatte ebenfalls eine Nutzschaltung umfasst, wobei die Nutzschaltungen der beiden Leiterplatten miteinander elektrisch verbunden sind.

7. Leiterplattenanordnung nach Anspruch 6,
**dadurch gekennzeichnet,**
**dass** die elektrische Verbindung der beiden Leiterplatten über Durchkontaktierungen (200) erfolgt, die im Bereich der Durchgangsöffnung an der Innenseite (170) des Abstandshalters angeordnet sind.

8. Leiterplattenanordnung nach einem der voranstehenden Ansprüche,
**dadurch gekennzeichnet,**
**dass** der Abstandshalter von einem Schutzring (450) umgeben ist, der zwischen den beiden Leiterplatten befestigt ist und den Abstandshalter umschließt.

9. Leiterplattenanordnung nach Anspruch 8,
**dadurch gekennzeichnet,**
**dass** der Schutzring aus einem leitenden Material gebildet ist oder mit einem leitenden Material außen beschichtet ist.

10. Leiterplattenanordnung nach einem der voranstehenden Ansprüche,
**dadurch gekennzeichnet,**
**dass** die Manipulationsdetektoreinrichtung eine Detektorschaltung (320) umfasst, die mit der Vielzahl der elektrischen Leiterbahnen verbunden ist und die feststellt, wenn Kurzschlüsse und/oder elektrische Unterbrechungen in einer oder in mehreren der Leiterbahnen auftreten.

11. Leiterplattenanordnung nach Anspruch 10,
**dadurch gekennzeichnet,**
**dass** die Manipulationsdetektoreinrichtung (300) mit der Nutzschaltung (50) in Verbindung steht und diese irreversibel außer Betrieb setzt, wenn die Detektorschaltung einen Kurzschluss und/oder eine elektrische Unterbrechung in einer oder in mehreren der Leiterbahnen feststellt.

12. Leiterplattenanordnung nach Anspruch 11,
**dadurch gekennzeichnet,**
**dass** die Manipulationsdetektoreinrichtung die Nutzschaltung außer Betrieb setzt, indem sie eine Speichereinrichtung (70) der Nutzschaltung löscht oder überschreibt.

13. Verfahren zum Herstellen einer Leiterplattenanordnung (10), bei dem
- eine Leiterplatte (20) mit einer elektrischen Nutzschaltung (50) versehen wird und
- eine Manipulationsdetektoreinrichtung (300) mit einer Detektorschicht (310) hergestellt wird, die die Nutzschaltung außen umschließt und detektieren kann, wenn auf die Nutzschaltung von außen unberechtigt zugegriffen wird,
- wobei ein Abstandshalter (180) mit einer Durchgangsöffnung (400) hergestellt wird, wobei der Abstandshalter mit einer Befestigungsfläche (620) auf der Leiterplatte derart angebracht wird, dass die Nutzschaltung im Bereich der Durchgangsöffnung liegt,
- auf einer der einen Befestigungsfläche (620) gegenüberliegenden weiteren Befestigungsfläche (630) des Abstandshalters eine weitere Leiterplatte (30) angeordnet wird,
- wobei als Detektorschicht eine Leiterbahnschicht (350) in der einen Leiterplatte, eine weitere Leiterbahnschicht (360) in der weiteren Leiterplatte sowie eine Leiterbahnschicht (365) außen am Abstandshalter verwendet werden,
- wobei der Abstandshalter (180) an seiner Außenseite (380) mit der Leiterbahnschicht (365) versehen ist und
- wobei die Außenseite (380) des Abstandshalters (180) unter einem vom rechten Winkel abweichenden Winkel zu den beiden Leiterplatten (20, 30) angeordnet ist.

14. Verfahren nach Anspruch 13,
**dadurch gekennzeichnet,**
**dass** für die Detektorschicht eine Vielzahl an elektrischen Leiterbahnen hergestellt wird, die eng benachbart zueinander, insbesondere mäanderförmig, verlaufen, wobei der Verlauf und die Anordnung der elektrischen Leiterbahnen für jede Leiterplattenanordnung individuell gewählt werden.

15. Verfahren nach Anspruch 14,
**dadurch gekennzeichnet,**
**dass** die elektrischen Leiterbahnen ganz oder teilweise **dadurch** hergestellt werden, dass eine elektrische Leiterbahnschicht ganzflächig aufgebracht wird und die Leiterbahnschicht mit einem Laser individuell strukturiert wird.

## Claims

1. Circuit board assembly (10) comprising
- a circuit board (20) comprising an electrical useful circuit (50) and
- a manipulation detector device (300) comprising a detector layer (310), which encloses the useful circuit on the outside and can detect if the useful circuit is accessed in an unauthorized manner from outside,
- wherein the circuit board assembly comprises a spacer (180) having a through-opening (400), wherein the spacer (180) is ring-shaped, wherein the inner ring region forms the through-opening, and wherein the spacer is fitted with a fixing surface (620) on the circuit board in such a way that the useful circuit lies in the region of the through-opening, and
- wherein a further circuit board (30) is arranged on a further fixing surface (630) of the spacer, situated opposite the first-mentioned fixing surface,
- wherein the detector layer comprises a conductor track layer (350) in the first-mentioned circuit board and a further conductor track layer (360) in the further circuit board,
**characterized**
- **in that** the spacer (180) is provided with a conductor track layer (365) on its outer side (380),
- **in that** the detector layer comprises the conductor track layer (365) on the outside on the spacer (180), and
- **in that** the outer side (380) of the spacer (180) is arranged at an angle with respect to the two circuit boards (20, 30) which deviates from a right angle.

2. Circuit board assembly according to Claim 1,
**characterized in that**,
as viewed in cross section, the area of the through-opening is greater than that of the two fixing surfaces.

3. Circuit board assembly according to either of the preceding claims,
**characterized in that**
the two fixing surfaces are arranged parallel to one another.

4. Circuit board assembly according to any of the preceding claims,
**characterized in that**
the detector layer comprises a multiplicity of electrical conductor tracks (370, 370', 370") which run closely adjacent to one another, in particular in meandering fashion.

5. Circuit board assembly according to any of the preceding claims,
**characterized in that**
the electrical conductor tracks (370, 370', 370") of the conductor track layer (365) of the spacer run around the through-opening, wherein each conductor track respectively encloses at least half of the through-opening.

6. Circuit board assembly according to any of the preceding claims,
**characterized in that**
the further circuit board likewise comprises a useful circuit, wherein the useful circuits of the two circuit boards are electrically connected to one another.

7. Circuit board assembly according to Claim 6,
**characterized in that**
the two circuit boards are electrically connected via plated-through holes (200) arranged in the region of the through-opening on the inner side (170) of the spacer.

8. Circuit board assembly according to any of the preceding claims,
**characterized in that**
the spacer is surrounded by a guard ring (450), which is fixed between the two circuit boards and encloses the spacer.

9. Circuit board assembly according to Claim 8,
**characterized in that**
the guard ring is formed from a conductive material or is coated with a conductive material on the outside.

10. Circuit board assembly according to any of the preceding claims,
**characterized in that**
the manipulation detector device comprises a detector circuit (320), which is connected to the multiplicity of electrical conductor tracks and which ascertains if short circuits and/or electrical interruptions occur in one or in a plurality of the conductor tracks.

11. Circuit board assembly according to Claim 10,
**characterized in that**
the manipulation detector device (300) is connected to the useful circuit (50) and deactivates the latter irreversibly if the detector circuit ascertains a short circuit and/or an electrical interruption in one or in a plurality of the conductor tracks.

12. Circuit board assembly according to Claim 11,
**characterized in that**
the manipulation detector device deactivates the useful circuit by erasing or overwriting a memory device (70) of the useful circuit.

13. Method for producing a circuit board assembly (10), wherein
- a circuit board (20) is provided with an electrical useful circuit (50), and
- a manipulation detector device (300) comprising a detector layer (310) is produced, which encloses the useful circuit on the outside and can detect if the useful circuit is accessed in an unauthorized manner from outside,
- wherein a spacer (180) having a through-opening (400) is produced, wherein the spacer is fitted with a fixing surface (620) on the circuit board in such a way that the useful circuit lies in the region of the through-opening,
- a further circuit board (30) is arranged on a further fixing surface (630) of the spacer, situated opposite the first-mentioned fixing surface (620),
- wherein a conductor track layer (350) in the first-mentioned circuit board, a further conductor track layer (360) in the further circuit board and a conductor track layer (365) on the outside on the spacer are used as detector layer,
- wherein the spacer (180) is provided with the conductor track layer (365) on its outer side (380), and
- wherein the outer side (380) of the spacer (180) is arranged at an angle with respect to the two circuit boards (20, 30) which deviates from a right angle.

14. Method according to Claim 13,
**characterized in that**
a multiplicity of electrical conductor tracks running closely adjacent to one another, in particular in meandering fashion, are produced for the detector layer, wherein the course and the arrangement of the electrical conductor tracks are chosen individually for each circuit board assembly.

15. Method according to Claim 14,
**characterized in that**
the electrical conductor tracks are wholly or partly produced by an electrical conductor track layer being applied over the whole area and the conductor track layer being individually structured by means of a laser.

## Revendications

1. Dispositif (10) à plaquette à circuit imprimé, comprenant
- une plaquette (10) à circuit imprimé ayant un circuit (50) électrique utile et
- un dispositif (300) formant détecteur de manipulation, comprenant une couche (310) formant détecteur qui entoure extérieurement le circuit utile et peut détecter si l'on a accédé de l'extérieur d'une façon qui n'est pas autorisée au circuit utile,
- dans lequel le dispositif à plaquette à circuit imprimé comprend un intercalaire (180) ayant une ouverture (400) de passage, l'intercalaire (180) étant annulaire la partie annulaire intérieure formant l'ouverture de passage et l'intercalaire étant appliqué par une surface (622) de fixation à la plaquette à circuit imprimé de manière à ce que le circuit utile se trouve dans la zone de l'ouverture de passage et
- dans lequel une autre plaquette (30) à circuit imprimé est disposée sur une autre surface (630) de fixation de l'intercalaire opposée à la une surface de fixation,
- dans lequel la couche formant détecteur comprend une couche (350) de piste conductrice dans la une plaquette à circuit imprimé et une autre couche (360) de piste conductrice dans l'autre plaquette à circuit imprimé, **caractérisé**
- **en ce que** l'intercalaire (180) est pourvu sur son côté (380) extérieur d'une couche (365) de piste conductrice,
- **en ce que** la couche formant détecteur comprend la couche (365) de piste conductrice à l'extérieur de l'intercalaire (180) et
- **en ce que** le côté (380) extérieur de l'intercalaire (180) fait un angle s'écartant de l'angle droit avec les deux plaquettes (20, 30) à circuit imprimé.

2. Dispositif à plaquette à circuit imprimé suivant la revendication 1,
**caractérisé**
**en ce que**, considéré en section transversale, la surface de l'ouverture de passage est plus grande que celle des deux surfaces de fixation.

3. Dispositif à plaquette à circuit imprimé suivant l'une des revendications précédentes,
**caractérisé**
**en ce que** les deux surfaces de fixation sont parallèles entre elles.

4. Dispositif à plaquette à circuit imprimé suivant l'une des revendications précédentes,
**caractérisé**
**en ce que** la couche formant détecteur comprend une pluralité de pistes (370, 370', 370") conductrices électriques, qui s'étendent en étant étroitement voisines les unes avec les autres, en étant notamment sinueuses.

5. Dispositif à plaquette à circuit imprimé suivant l'une des revendications précédentes,
**caractérisé**
**en ce que** les pistes (370, 370', 370") conductrices électriques de la couche (365) de piste conductrice de l'intercalaire courent autour de l'ouverture de passage, chaque piste conductrice entourant respectivement au moins la moitié de l'ouverture de passage.

6. Dispositif à plaquette à circuit imprimé suivant l'une des revendications précédentes,
**caractérisé**
**en ce que** l'autre plaquette à circuit imprimé comprend également un circuit utile, les circuits utiles des deux plaquettes à circuit imprimé étant reliés électriquement entre eux.

7. Dispositif à plaquette à circuit imprimé suivant la revendication 6,
**caractérisé**
**en ce que** la liaison électrique des deux plaquettes à circuit imprimé s'effectue par des contacts (200) traversant, qui sont disposés dans la zone de l'ouverture de passage du côté (170) intérieur de l'intercalaire.

8. Dispositif à plaquette à circuit imprimé suivant l'une des revendications précédentes,
**caractérisé**
**en ce que** l'intercalaire est entouré d'une bague (450) de protection, qui est fixée entre les deux plaquettes à circuit imprimé et qui entoure l'intercalaire.

9. Dispositif à plaquette à circuit imprimé suivant la revendication 8,
**caractérisé**
**en ce que** la bague de protection est en un matériau conducteur ou est revêtue extérieurement d'un matériau conducteur.

10. Dispositif à plaquette à circuit imprimé suivant l'une des revendications précédentes,
**caractérisé**
**en ce que** le dispositif formant détecteur de manipulation comprend un circuit (320) formant détecteur, qui est relié à la pluralité des pistes conductrices électriques et qui constate si des courts-circuits et/ou des interruptions électriques se produisent dans l'une des pistes conductrices ou dans plusieurs des pistes conductrices.

11. Dispositif à plaquette à circuit imprimé suivant la revendication 10,
**caractérisé**
**en ce que** le dispositif (300) formant détecteur de manipulation est en liaison avec le circuit (50) utile et met celui-ci irréversiblement hors de fonctionnement si le circuit formant détecteur constate un court-circuit et/ou une interruption électrique dans l'une des pistes conductrices ou dans plusieurs des pistes conductrices.

12. Dispositif à plaquette à circuit imprimé suivant la revendication 11,
**caractérisé**
**en ce que** le dispositif formant détecteur de manipulation met le circuit utile hors de fonctionnement en effaçant ou en écrasant un dispositif (70) de mémoire du circuit utile.

13. Procédé de fabrication d'un dispositif (10) à plaquette à circuit imprimé, dans lequel
- on munit une plaquette (20) à circuit imprimé d'un circuit (50) électrique utile et
- on fabrique un dispositif (300) formant détecteur de manipulation et ayant une couche (310) formant détecteur, qui entoure extérieurement le circuit utile et qui peut détecter si on accède de l'extérieur d'une manière non autorisée au circuit utile,
- dans lequel on fabrique un intercalaire (180) ayant une ouverture (400) de passage, l'intercalaire étant mis par une surface (620) de fixation sur la plaquette à circuit imprimé de manière à ce que le circuit utile se trouve dans la zone de l'ouverture de passage,
- on monte une autre plaquette (30) à circuit imprimé sur une autre surface (630) de fixation, opposée à la une surface (620) de fixation, de l'intercalaire,
- on utilise comme couche formant détecteur une couche (350) de piste conductrice dans la une plaquette à circuit imprimé, une autre couche (360) de piste conductrice dans l'autre plaquette à circuit imprimé, ainsi qu'une couche (365) de piste conductrice extérieure sur l'intercalaire,
- dans lequel on munit l'intercalaire (180) sur son côté (380) extérieur de la couche (365) de piste conductrice et
- dans lequel le côté (380) extérieur de l'intercalaire (180) fait un angle s'écartant de l'angle droit avec les deux plaquettes (20, 30) à circuit imprimé.

14. Procédé suivant la revendication 13,
**caractérisé en ce que**
l'on fabrique, pour la couche formant détecteur, une pluralité de pistes conductrices électriques, qui s'étendent en étant étroitement voisines les unes des autres, en étant notamment sinueuses, le tracé et l'agencement des pistes conductrices électriques étant choisis individuellement pour chaque dispositif de plaquette à circuit imprimé.

15. Procédé suivant la revendication 14,
**caractérisé en ce que**
l'on fabrique les pistes conductrices électriques en tout ou partie en déposant sur toute la surface une couche de piste conductrice électrique et en structurant individuellement la couche de piste conductrice par un laser.
